# EUROPÄISCHE PATENTSCHRIFT

(11) **EP 3 332 047 B1**
(45) Veröffentlichungstag und Bekanntmachung des Hinweises auf die Patenterteilung: **05.10.2022**
(21) Anmeldenummer: 16747517.7
(22) Anmeldetag: 03.08.2016
(51) Int. Cl.: C21D 1/26, C21D 6/00, C22C 33/00, C23C 2/02, C21D 8/02, C21D 8/04, C21D 9/46, C22C 38/00, C22C 38/02, C22C 38/04, C22C 38/06, C22C 38/18, C22C 38/20, C22C 38/22, C22C 38/40, C22C 38/42, C22C 38/44

(54) **VERFAHREN ZUR HERSTELLUNG EINES FLEXIBEL GEWALZTEN STAHLFLACHPRODUKTS UND DESSEN VERWENDUNG**
PRODUCTION METHOD OF A FLEXIBLY-ROLLED STEEL SHEET PRODUCT AND ITS USE
PROCÉDÉ DE FABRICATION D'UN PRODUIT PLAT EN ACIER LAMINÉ FLEXIBLE ET SON UTILISATION

(30) Priorität: 05.08.2015 DE 102015112889
(43) Veröffentlichungstag der Anmeldung: 13.06.2018
(73) Patentinhaber: Salzgitter Flachstahl GmbH, 38239 Salzgitter (DE)
(72) Erfinder: PALZER, Peter, 38704 Liebenburg (DE); EVERTZ, Thomas, 31228 Peine (DE)
(74) Vertreter: Moser Götze & Partner Patentanwälte mbB
(86) Internationale Anmeldenummer: PCT/EP2016/068575
(87) Internationale Veröffentlichungsnummer: WO 2017/021464

(56) Entgegenhaltungen:
- EP-A1- 1 199 375
- EP-A1- 2 031 081
- EP-A1- 2 767 601
- EP-A2- 1 181 991
- EP-A2- 2 383 353
- DE-A1-102013 010 025
- DE-C1- 10 055 338
- DE-C1- 19 933 113

## Beschreibung

Die Erfindung betrifft ein Verfahren zur Herstellung eines flexibel gewalzten Stahlflachprodukts aus einem hochfesten manganhaltigen TRIP- und/oder TWIP-Stahl mit erhöhtem Widerstand gegen wasserstoffinduzierte verzögerte Rissbildung (delayed fracture) und Wasserstoffversprödung (hydrogen embrittlement), eine Verwendung dieses flexibel gewalzten Stahlflachprodukts und ein Verfahren zur Herstellung eines flexibel gewalzten Stahlflachprodukts.

Aus der europäischen Patentanmeldung EP 2 383 353 A2 ist ein höherfester manganhaltiger Stahl, ein Stahlflachprodukt aus diesem Stahl und ein Verfahren zur Herstellung dieses Stahlflachprodukts bekannt. Der Stahl besteht aus den Elementen (Gehalte in Gewichtsprozent und bezogen auf die Stahlschmelze): C: bis 0,5; Mn: 4 bis 12,0; Si: bis zu 1,0; AI: bis zu 3,0; Cr: 0,1 bis 4,0; Cu: bis zu 4,0; Ni: bis zu 2,0; N: bis zu 0,05; P: bis zu 0,05; S: bis zu 0,01; sowie Rest Eisen und unvermeidbarer Verunreinigungen. Optional sind ein oder mehrere Elemente aus der Gruppe "V, Nb, Ti" vorgesehen, wobei die Summe der Gehalte dieser Elemente höchstens gleich 0,5 ist. Dieser Stahl soll sich dadurch auszeichnen, dass dieser kostengünstiger herzustellen ist als hochmanganhaltige Stähle und gleichzeitig hohe Bruchdehnungswerte und damit einhergehend eine deutlich verbesserte Umformbarkeit besitzt. Ein Verfahren zur Herstellung eines Stahlflachprodukts aus dem vorbeschriebenen höherfesten manganhaltigen Stahl, umfasst die folgende Arbeitsschritte: - Erschmelzen der vorbeschriebenen Stahlschmelze, - Erzeugen eines Ausgangsprodukts für ein anschließendes Warmwalzen, indem die Stahlschmelze zu einem Strang, von dem mindestens eine Bramme oder Dünnbramme als Ausgangsprodukt für das Warmwalzen abgeteilt wird, oder zu einem gegossenen Band vergossen wird, das als Ausgangsprodukt dem Warmwalzen zugeführt wird, - Wärmebehandeln des Ausgangsprodukts, um das Ausgangsprodukt auf eine Warmwalzstarttemperatur von 1150 bis 1000 °C zu bringen, - Warmwalzen des Ausgangsprodukts zu einem Warmband mit einer Dicke von höchstens 2,5 mm, wobei das Warmwalzen bei einer 1050 bis 800 °C betragenden Warmwalzendtemperatur beendet wird, - Haspeln des Warmbands zu einem Coil bei einer Haspeltemperatur von ≤ 700 °C.

Des Weiteren ist aus der deutschen Patentschrift DE 10 2012 110 972 ein Verfahren zum Herstellen eines Erzeugnisses aus flexibel gewalztem Bandmaterial bekannt. Mittels flexiblen Walzens wird aus einem Bandmaterial mit weitestgehend konstanter Dicke ein flexibel gewalztes Bandmaterial mit über der Länge des Bandmaterials variabler Dicke erzeugt.

Ferner sind in der deutschen Offenlegungsschrift DE 10 2012 013 113 A1 bereits sogenannte TRIP-Stähle beschrieben, die ein überwiegend ferritisches Grundgefüge mit eingelagertem Restaustenit aufweisen, der während einer Umformung zu Martensit umwandeln kann (TRIP-Effekt). Wegen seiner starken Kaltverfestigung erreicht der TRIP-Stahl hohe Werte der Gleichmaßdehnung und Zugfestigkeit. Zum Einsatz kommen TRIP-Stähle u. a. in Struktur-, Fahrwerks- und crashrelevanten Bauteilen von Fahrzeugen, als Blechplatinen, Tailored Blanks (geschweißte Platinen) sowie als flexibel kaltgewalzte Bänder, sogenannte TRB's. Die flexibel kaltgewalzten Bänder ermöglichen eine signifikante Gewichtsreduktion durch eine belastungsangepasste Blechdicke über die Bauteillänge.

Die Offenlegungsschrift EP 1 199 375 A1 beschreibt einen nicht-wärmebehandelten Stahl, der in Gew.-% enthält: C: 0,05 bis 0,1; Si: < 1,0; Mn: 2,2 bis 5,0; S: < 0,020; Cu: 0,01 bis 3,0; Ni: < 3,0; Cr: 0,01 bis 2,0; AI: < 0,1; Ti: 0,01 bis 0,1; B: 0,0003 bis 0,03; N: 0,0010 bis 0,020; O: < 0,006; sowie Rest Eisen und unvermeidbare Verunreinigungen. Zudem beschreibt die Offenlegungsschrift DE 199 33 113 C1 ein flexibel gewalztes Stahlflachprodukt.

Hiervon ausgehend liegt der vorliegenden Erfindung die Aufgabe zu Grunde, ein Verfahren zur Herstellung eines flexibel gewalzten Stahlflachprodukts aus einem hochfesten manganhaltigen TRIP- und/oder TWIP-Stahl, insbesondere zur Herstellung von flexibel gewalztem Warmband oder Kaltband, mit guten Umformeigenschaften und mit erhöhtem Widerstand gegen wasserstoffinduzierte verzögerte Rissbildung und Wasserstoffversprödung und eine Verwendung dieses flexibel gewalzten Stahlflachproduktes zu schaffen, die bezogen auf den Stahl eine gute Kombination von Festigkeits- und Umformeigenschaften bieten und wobei das Stahlflachprodukt gleichmäßige Eigenschaften auch bei unterschiedlichen Umformgraden aufweist.

Diese Aufgabe wird durch ein Verfahren zur Herstellung eines flexibel gewalzten Stahlflachprodukts aus einem hochfesten manganhaltigen TRIP- und/oder TWIP-Stahl, insbesondere zur Herstellung von flexibel gewalztem Warmband oder Kaltband mit erhöhtem Widerstand gegen wasserstoffinduzierte verzögerte Rissbildung und Wasserstoffversprödung mit den Merkmalen des Anspruchs 1 und eine Verwendung dieses flexibel gewalzten Stahlflachprodukts mit den Merkmalen des Anspruchs 14 gelöst. Vorteilhafte Ausgestaltungen der Erfindung sind in den Unteransprüchen angegeben.

Ein flexibel gewalztes Stahlflachprodukt aus einem hochfesten manganhaltigen Stahl, insbesondere zur Herstellung eines flexibel gewalztem Stahlflachprodukts in Form eines Warm- oder Kaltbandes, bestehend aus folgender chemischer Zusammensetzung (in Gewichts-%): C: 0,005 bis 0,6; Mn: 4 bis 10; AI: 0,005 bis 4; Si: 0,005 bis 2; P: 0,001 bis 0,2; S: bis 0,05; N: 0,001 bis 0,3; Rest Eisen einschließlich unvermeidbarer stahlbegleitender Elemente, mit optionaler Zulegierung von einem oder mehreren der folgenden Elemente (in Gew.-%): Sn: 0 bis 0,5; Ni: 0 bis 2; Cu: 0,005 bis 3; Cr: 0,1 bis 4; V: 0,005 bis 0,9; Nb: 0,005 bis 0,9; Ti: 0,005 bis 0,9; Mo: 0,01 bis 3; W: 0,1 bis 3; Co: 0,1 bis 3; B: 0,0001 bis 0,05; Zr: 0,005 bis 0,5; Ca: 0,0002 bis 0,1 bietet eine gute Kombination von Festigkeits-, Dehnungs- und Umformeigenschaften. Auch ist eine gute Schweißbarkeit gegeben. Außerdem ist die Herstellung dieses erfindungsgemäßen Manganstahls mit mittlerem Mangangehalt (medium manganese steel) auf der Basis der Legierungselemente C, Mn, AI und Si relativ kostengünstig. Der erfindungsgemäße Manganstahl zeichnet sich außerdem durch einen erhöhten Widerstand gegenüber verzögerter Rissbildung (delayed fracture) und gegenüber Wasserstoffversprödung (hydrogen embrittlement) aus. Bei dem erfindungsgemäßen Stahl handelt es sich um eine Legierung, die einen TRIPund/oder TWIP-Effekt aufweist, welcher das Umformvermögen und die Zugfestigkeit verbessert. Des Weiteren wird das Bauteilversagen hierdurch im Falle von Überlastungen dadurch abgemildert, dass das Bauteil lokal verformt wird, wobei Spannungen abgebaut werden und dadurch ein plötzliches Versagen, beispielsweise durch Reißen des Bauteils vermindert wird. Außerdem eignet sich der erfindungsgemäße Stahl besonders zur Herstellung von flexibel gewalztem Warmband oder Kaltband. Das erfindungsgemäß hergestellte flexibel gewalzte Stahlflachprodukt weist mit der erfindungsgemäßen Legierungszusammensetzung gleichmäßige Eigenschaften auch bei unterschiedlichen Umformgraden über die Bandlänge auf.

Die erfindungsgemäße Legierung bzw. das daraus hergestellte flexibel gewalzte Stahlflachprodukt weist ein mehrphasiges Gefüge, bestehend aus Ferrit und/oder Martensit und/oder Bainit sowie Restaustenit auf. Der Restaustenitanteil beträgt 5 % bis 75 %. Der Restaustenit wird beim Aufbringen entsprechend hoher mechanischer Spannungen durch den TRIP-Effekt teilweise oder vollständig in Martensit umgewandelt. Durch den TRIP-Effekt steigt die Bruchdehnung, insbesondere Gleichmaßdehnung, und die Zugfestigkeit deutlich an.

Die Verwendung des Begriffs "bis" in der Definition der Gehaltsbereiche, wie beispielsweise 0,005 bis 0,6 Gew.-%, bedeutet, dass die Eckwerte - im Beispiel 0,005 und 0,6 - mit eingeschlossen sind.

In vorteilhafter Weise weist der Stahl eine Zugfestigkeit Rm von mindestens 700 MPa, vorzugsweise > 800 bis 1600 MPa auf und eine Bruchdehnung A50 von 6 % bis 45 % auf. Die Dehnungs- und Zähigkeitseigenschaften werden vorteilhaft durch den einsetzenden TRIP- und/oder TWIP-Effekt der erfindungsgemäßen Legierungen verbessert.

Legierungselemente werden dem Stahl in der Regel zugegeben, um gezielt bestimmte Eigenschaften zu beeinflussen. Dabei kann ein Legierungselement in verschiedenen Stählen unterschiedliche Eigenschaften beeinflussen. Die Wirkung und Wechselwirkung hängt im Allgemeinen stark von der Menge, der Anwesenheit weiterer Legierungselemente und dem Lösungszustand im Werkstoff ab. Die Zusammenhänge sind vielseitig und komplex. Im Folgenden soll auf die Wirkung der Legierungselemente in dem erfindungsgemäßen Stahl näher eingegangen werden. Nachfolgend werden auch die positiven Effekte der erfindungsgemäß verwendeten Legierungselemente beschrieben:
Kohlenstoff C: Wird benötigt zur Bildung von Karbiden, stabilisiert den Austenit und erhöht die Festigkeit. Höhere Gehalte an C verschlechtern die Schweißeigenschaften und führen in den erfindungsgemäßen Stählen zur Verschlechterung der Dehnungsund Zähigkeitseigenschaften, weshalb ein maximaler Gehalt von 0,6 Gew.-% festgelegt wird. Um eine ausreichende Festigkeit des Werkstoffs zu erreichen, ist eine Mindestzugabe von 0,005 Gew.-% vorgesehen.

Mangan Mn: Stabilisiert den Austenit, erhöht die Festigkeit und die Zähigkeit und ermöglicht eine verformungsinduzierte Martensit- und/oder Zwillingsbildung in der erfindungsgemäßen Legierung. Gehalte kleiner 4 Gew.-% sind nicht ausreichend zur Stabilisierung des Austenits und verschlechtern somit die Dehnungseigenschaften, während bei Gehalten von 10 Gew.-% und mehr der Austenit zu stark stabilisiert wird und dadurch die Festigkeitseigenschaften, insbesondere die Streckgrenze, verringert werden. Für den erfindungsgemäßen Manganstahl mit mittleren Mangangehalten wird ein Bereich von 4 bis 10 Gew.-% bevorzugt.

Aluminium Al: Al wird zur Desoxidation von Stählen genutzt. Des Weiteren verbessert ein Al-Gehalt von größer 0,1 Gew.-% vorteilhaft die Festigkeits- und Dehnungseigenschaften und beeinflusst das Umwandlungsverhalten der erfindungsgemäßen Legierung positiv. Des Weiteren konnte eine Verbesserung der Kaltwalzbarkeit durch Zulegieren von Al beobachtet werden. Unter 4 Gew.-% verzögert Al die Ausscheidung von Karbiden. Auch verschlechtern höhere Al-Gehalte das Gießverhalten im Strangguss deutlich. Hierdurch entsteht ein höherer Aufwand beim Vergießen. Gehalte an Al von mehr als 4 Gew.-% verschlechtern die Dehnungseigenschaften. Daher wird ein maximaler Gehalt von 4 Gew.-% und ein minimaler Gehalt von > 0,005 Gew.-% festgelegt. Vorzugsweise wird ein minimaler Al-Gehalt von größer als 0,1 Gew.-% festgelegt. Besonders bevorzugt ist der minimale Al-Gehalt > 0,5 Gew.-%, wobei der Gehalt an gelöstem Stickstoff in der Legierung auf < 300 ppm begrenzt ist.

Silizium Si: Behindert die Kohlenstoffdiffusion, verringert die spezifische Dichte und erhöht die Festigkeit und die Dehnungs- sowie Zähigkeitseigenschaften. Des Weiteren konnte eine Verbesserung der Kaltwalzbarkeit durch Zulegieren von Si beobachtet werden. Gehalte von mehr als 2 Gew.-% führen in den erfindungsgemäßen Legierungen zu einer Versprödung des Werkstoffs und beeinflussen die Warm- und Kaltwalzbarkeit sowie die Beschichtbarkeit beispielsweise durch Verzinken negativ. Daher wird ein maximaler Gehalt von 2 Gew.-% und ein minimaler Gehalt von 0,005 Gew.-% festgelegt. Vorzugsweise wird ein minimaler Si-Gehalt von größer als 0,5 Gew.-% festgelegt.

Vorzugsweise ist die Summe der Gehalte (in Gew.-%) von Al und Si auf > 0,8 festgelegt.

Phosphor P: Ist ein Spurenelement aus dem Eisenerz und wird im Eisengitter als Substitutionsatom gelöst. Phosphor steigert durch Mischkristallverfestigung die Härte und verbessert die Härtbarkeit. Es wird allerdings in der Regel versucht, den Phosphorgehalt soweit wie möglich abzusenken, da er unter anderem durch seine geringe Diffusionsgeschwindigkeit stark seigerungsanfällig ist und in hohem Maße die Zähigkeit vermindert. Durch die Anlagerung von Phosphor an den Korngrenzen können Risse entlang der Korngrenzen beim Warmwalzen auftreten. Zudem setzt Phosphor die Übergangstemperatur von zähem zu sprödem Verhalten um bis zu 300 °C herauf. Aus vorgenannten Gründen ist der Phosphorgehalt auf kleiner gleich 0,2 Gew.-% begrenzt und ein Mindestgehalt von 0,001 Gew.-% vorgesehen.

Schwefel S: Ist wie Phosphor als Spurenelement im Eisenerz gebunden. Er ist im Stahl im Allgemeinen unerwünscht, da er zu starker Seigerung neigt und stark versprödend wirkt. Es wird daher versucht, möglichst geringe Mengen an Schwefel in der Schmelze zu erreichen (z. B. durch eine Tiefvakuumbehandlung). Aus vorgenannten Gründen ist der Schwefelgehalt auf kleiner gleich 0,05 Gew.-% begrenzt.

Stickstoff N: N ist ebenfalls ein Begleitelement aus der Stahlherstellung. Er verbessert im gelösten Zustand bei höher manganhaltigen Stählen von größer gleich 4 Gew.-% Mn die Festigkeits- und Zähigkeitseigenschaften. Niedriger Mn-legierte Stähle von unter 4 Gew.-% Mn mit freiem Stickstoff neigen zu einem starken Alterungseffekt. Der Stickstoff diffundiert schon bei geringen Temperaturen an Versetzungen und blockiert diese. Er bewirkt damit einen Festigkeitsanstieg verbunden mit einer Abnahme der Zähigkeitseigenschaften. Ein Abbinden des Stickstoffes in Form von Nitriden ist durch Zulegieren beispielsweise von Aluminium, Vanadium, Niob oder Titan möglich. Aus vorgenannten Gründen ist der Stickstoffgehalt auf kleiner 0,3 Gew.-% begrenzt und ein Mindestgehalt von 0,001 Gew.-% vorgesehen.

Zinn Sn: Zinn steigert die Festigkeit, reichert sich jedoch ähnlich Kupfer bei höheren Temperaturen unter der Zunderschicht und an den Korngrenzen an. Es führt durch Eindringen in die Korngrenzen zur Bildung niedrig schmelzender Phasen und damit verbunden zu Rissen im Gefüge und zu Lotbrüchigkeit, weshalb optional ein Maximalgehalt von kleiner gleich 0,5 Gew.-% festgelegt wird. Vorzugsweise liegt ein Minimalgehalt bei 0,005 Gew.-%.

Nickel Ni: Ni stabilisiert den Austenit und verbessert die Dehnungseigenschaften insbesondere bei niedrigen Anwendungstemperaturen, weshalb optional ein Maximalgehalt von kleiner gleich 2,0 Gew.-% festgelegt wird. Vorzugsweise liegt ein Minimalgehalt bei 0,1 Gew.-%.

Kupfer Cu: Verringert die Korrosionsrate und steigert die Festigkeit. Gehalte oberhalb 3 Gew.-% verschlechtern die Herstellbarkeit durch Bildung niedrig schmelzender Phasen beim Vergießen und Warmwalzen weshalb optional ein Maximalgehalt von 3 Gew.-% und ein Minimalgehalt von 0,05 Gew.-% festgelegt wird. Besonders bevorzugt wird ein Minimalgehalt auf 0,1 Gew.-% festgelegt.

Chrom Cr: Verbessert die Festigkeit und verringert die Korrosionsrate, verzögert die Ferrit- und Perlitbildung und bildet Karbide. Der maximale Gehalt wird optional mit kleiner 4 Gew.-% festgelegt, da höhere Gehalte eine Verschlechterung der Dehnungseigenschaften zur Folge haben. Ein minimaler Cr-Gehalt wird mit 0,1 Gew.% festgelegt.

Mikrolegierungselemente werden in der Regel nur in sehr geringen Mengen zugegeben (< 0,1 Gew.-% pro Element). Sie wirken im Gegensatz zu den Legierungselementen hauptsächlich durch Ausscheidungsbildung, können aber auch in gelöstem Zustand die Eigenschaften beeinflussen. Trotz der geringen Mengenzugaben beeinflussen Mikrolegierungselemente die Herstellungsbedingungen sowie die Verarbeitungs- und Endeigenschaften stark.

Typische Mikrolegierungselemente sind Vanadium, Niob und Titan. Diese Elemente können im Eisengitter gelöst werden und bilden mit Kohlenstoff und Stickstoff Karbide, Nitride und Carbonitride.

Vanadium V und Niob Nb: Diese wirken insbesondere durch die Bildung von Karbiden kornfeinend, wodurch gleichzeitig die Festigkeit, Zähigkeit und Dehnungseigenschaften verbessert werden. Gehalte von jeweils über 0,9 Gew.-% bringen keine weiteren Vorteile. Mindestgehalte von jeweils 0,005 Gew.-% können optional zugegeben werden.

Titan Ti: Wirkt als Karbidbildner kornfeinend, wodurch gleichzeitig die Festigkeit, Zähigkeit und Dehnungseigenschaften verbessert werden und vermindert die interkristalline Korrosion. Gehalte an Ti von über 0,9 Gew.-% verschlechtern die Dehnungs- und Umformeigenschaften in den erfindungsgemäßen Legierungen, weshalb optional ein Maximalgehalt von 0,9 Gew.-% festgelegt wird. Mindestgehalte von 0,005 Gew.-% können optional zugegeben werden.

Molybdän Mo: Wirkt als starker Karbidbildner und erhöht die Festigkeit. Gehalte an Mo von über 3 Gew.-% verschlechtern die Dehnungseigenschaften, weshalb optional ein Maximalgehalt von 3 Gew.-% und ein Minimalgehalt von 0,01 Gew.-% festgelegt wird.

Wolfram W: Wolfram wirkt als Karbidbildner und erhöht die Festigkeit und Warmfestigkeit. Gehalte an W von über 3 Gew.-% verschlechtern die Dehnungseigenschaften, weshalb optional ein Maximalgehalt von 3 Gew.-% und ein Minimalgehalt von 0,1 Gew.-% festgelegt wird.

Kobalt Co: Kobalt erhöht die Festigkeit des Stahls, stabilisiert den Austenit und verbessert die Warmfestigkeit. Gehalte von über 3 Gew.-% verschlechtern die Dehnungseigenschaften in den erfindungsgemäßen Legierungen, weshalb optional ein Maximalgehalt von 3 Gew.-% und ein Minimalgehalt von 0,1 Gew.-% festgelegt wird.

Bor B: Bor verbessert die Festigkeit und stabilisiert den Austenit. Gehalte von mehr als 0,05 Gew.-% führen zu einer Versprödung des Werkstoffs. Daher wird bei dem erfindungsgemäßen Stahl B optional im Bereich von 0,0001 Gew.-% bis 0,05 Gew.-% zulegiert. Besonders bevorzugt wird ein Minimalgehalt auf 0,0005 Gew.-% festgelegt.

Zirkonium Zr: Zirkonium wirkt als Karbidbildner und verbessert die Festigkeit. Gehalte an Zr von über 0,5 Gew-% verschlechtern die Dehnungseigenschaften, weshalb optional ein Maximalgehalt von 0,5 Gew.-% und ein Minimalgehalt von 0,005 Gew.-% festgelegt wird. Besonders bevorzugt wird ein Minimalgehalt auf 0,01 Gew.-% festgelegt.

Kalzium Ca: Kalzium wird zur Modifikation nichtmetallischer oxidischer Einschlüsse genutzt, welche sonst zu einem unerwünschten Versagen der Legierung durch Einschlüsse im Gefüge, welche als Spannungskonzentrationsstellen wirken und den Metallverbund schwächen, führen könnten. Des Weiteren verbessert Ca die Homogenität der erfindungsgemäßen Legierung. Um eine entsprechende Wirkung zu entfalten, ist ein Mindestgehalt von 0,0002 Gew.-% notwendig. Gehalte von oberhalb 0,1 Gew.-% Ca bringen keinen weiteren Vorteil bei der Einschlussmodifikation, verschlechtern die Herstellbarkeit und sollten aufgrund des hohen Dampfdrucks von Ca in Stahlschmelzen vermieden werden.

Das vorbeschriebene erfindungsgemäß hergestellte flexibel gewalzte Stahlflachprodukt ermöglicht aufgrund des angepassten Blechdickenprofils eine Gewichtsreduktion und somit geringere Produktionskosten und eine Steigerung der Effizienz. Flexibel gewalzte Stahlflachprodukte kommen dabei beispielsweise in der Automobilindustrie (Fahrzeugkarosserien), Agrartechnik, im Schienenfahrzeugbau, in der Verkehrstechnik oder Hausgerätetechnik zum Einsatz.

Erfindungsgemäß liefert ein Verfahren zur Herstellung eines flexibel gewalzten Stahlflachprodukts, umfassend die Schritte: - Erschmelzen einer Stahlschmelze bestehend aus (in Gewichts-%): C: 0,005 bis 0,6; Mn: 4 bis 10; AI: 0,005 bis 4; Si: 0,005 bis 2; P: 0,001 bis 0,2; S: bis 0,05; N: 0,001 bis 0,3; Rest Eisen einschließlich unvermeidbarer stahlbegleitender Elemente, mit optionaler Zulegierung von einem oder mehreren der folgenden Elemente (in Gewichts-%): Sn: 0 bis 0,5; Ni: 0 bis 2; Cu: 0,005 bis 3; Cr: 0,1 bis 4; V: 0,005 bis 0,9; Nb: 0,005 bis 0,9; Ti: 0,005 bis 0,9; Mo: 0,01 bis 3; W: 0,1 bis 3; Co: 0,1 bis 3; B: 0,0001 bis 0,05; Zr: 0,005 bis 0,5; Ca: 0,0002 bis 0,1; - Vergießen der Stahlschmelze zu einem Vorband mittels eines endabmessungsnahen horizontalen oder vertikalen Bandgießverfahrens oder Vergießen der Stahlschmelze zu einer Bramme oder Dünnbramme mittels eines horizontalen oder vertikalen Brammen- oder Dünnbrammengießverfahrens, - Flexibles Warmwalzen des Vorbandes, insbesondere mit einer Dicke von größer 3 mm, oder der Bramme oder der Dünnbramme zu einem flexibel gewalzten Stahlflachprodukt oder Warmwalzen des Vorbandes, insbesondere mit einer Dicke von größer 3 mm, oder der Bramme oder der Dünnbramme zu einem Warmband mit einer einheitlichen Dicke, - Optionales Glühen des Warmbandes, - Flexibles Kaltwalzen des auf eine einheitliche Dicke gewalzten Warmbandes oder des endabmessungsnah gegossenen Vorbandes mit einer Dicke von kleiner gleich 3 mm unter Ausnutzung des TRIP und/oder TWIP-Effekts zu einem flexibel gewalzten Stahlflachprodukt oder Kaltwalzen des auf eine einheitliche Dicke gewalzten Warmbandes oder des endabmessungsnah gegossenen Vorbandes mit einer Dicke von kleiner gleich 3 mm zu einem Kaltband mit einer einheitlichen Dicke, optionales Glühen des Kaltbandes und anschließendes flexibles Kaltwalzen des auf eine einheitliche Dicke gewalzten Kaltbandes unter Ausnutzung des TRIP und/oder TWIP-Effekts zu einem flexibel gewalzten Stahlflachprodukt, - Glühen des flexibel gewalzten Stahlflachprodukts mit folgenden Parametern: Glühtemperatur: 600 bis 750 °C, Glühdauer: 1 Minute bis 48 Stunden ein Stahlflachprodukt mit einer guten Kombination von Festigkeits-, Dehnungs- und Umformeigenschaften, sowie einem erhöhten Widerstand gegenüber verzögerter Rissbildung und Wasserstoffversprödung, welches zusätzlich bei mechanischer Beanspruchung einen TRIP- und/oder TWIP-Effekt aufweist.

Im Zusammenhang mit dem vorstehenden erfindungsgemäßen Verfahren wird ein endabmessungsnah mit dem Zwei-Rollen Gießverfahren erzeugtes Vorband mit einer Dicke von kleiner gleich 3 mm, vorzugsweise 1 mm bis 3 mm, bereits als Warmband mit einer einheitlichen Dicke verstanden. Das so als Warmband mit einer einheitlichen Dicke produzierte Vorband weist, bedingt durch die eingebrachte Umformung der beiden gegenläufigen Walzen, keine 100%-Gussstruktur auf. Ein Warmwalzen findet somit bereits inline während des Zwei-Rollen-Gießverfahrens statt, so dass ein separates Warmwalzen entfallen kann.

Das Glühen des flexibel gewalzten Stahlflachprodukts findet mit einer Glühtemperatur von 600 bis 750 °C und einer Glühdauer von 1 Minute bis 48 Stunden statt. Höhere Temperaturen werden hierbei kürzeren Behandlungszeiten und umgekehrt zugeordnet. Das Glühen kann sowohl beispielsweise in einer Haubenglühe (längere Glühzeiten), als auch beispielsweise in einer Durchlaufglühe (kürzere Glühzeiten) erfolgen. Durch das Glühen können annähernd homogene mechanische Eigenschaften in den unterschiedlichen Dickenbereichen des flexibel gewalzten Stahlflachprodukts eingestellt werden, die in einem späteren Umformprozess eine gute Verarbeitbarkeit sicherstellen.

Das erfindungsgemäße Verfahren führt insgesamt über eine Optimierung der Metallurgie, der Warmwalzbedingungen und der Temperatur-Zeit-Parameter an der Glühanlage zu einem Kaltband beziehungsweise Warmband, das sich besonders gut für ein anschließendes flexibles Walzen eignet. Als Glühanlage kommen zum Beispiel eine Haubenglühe oder eine kontinuierliche Durchlaufglühanlage in Betracht.

In Bezug auf weitere Vorteile wird auf die vorstehenden Ausführungen zu dem erfindungsgemäß hergestellten flexibel gewalzten Stahlflachprodukt verwiesen. Das Verfahren führt zu einem flexibel gewalzten Stahlflachprodukt als Halbzeug für eine nachfolgende Umformung, welches vorteilhaft einen TRIP- und/oder TWIP-Effekt aufweist. Die erfindungsgemäße Legierung zeigt hierbei das besondere Verhalten, dass sich bei den verschiedenen Blechstärken des flexibel gewalzten Stahlflachprodukts während der anschließenden Glühung über die gesamte Bandlänge Festigkeiten und Dehnungskennwerte auf gleichem Niveau einstellen. Diese Festigkeiten und Dehnungskennwerte sind nahezu unabhängig vom Grad der Kaltverformung.

Im Zusammenhang mit der vorliegenden Erfindung wird unter flexiblem Walzen ein Verfahren zur Herstellung von Stahlflachprodukten verstanden, bei dem über einen einstellbaren Walzspalt ein Stahlflachprodukt mit unterschiedlichen Dicken in nahezu beliebiger Abfolge in Walzrichtung hergestellt wird. Vorteil ist der homogene Übergang zwischen zwei konstanten Dicken. Dickenunterschiede von bis zu 50 % können innerhalb eines flexibel gewalzten Stahlflachprodukts erreicht werden. Das über flexibles Walzen hergestellte Stahlflachprodukt wird bevorzugt verwendet, um im Sinne eines vorgefertigten Halbzeugs anschließend zum Beispiel durch Tiefziehen oder Rollprofilieren zu einem gewünschten Bauteil umgeformt zu werden. Die umgeformten Bauteile werden vielfach in der Automobilindustrie für die Herstellung von Fahrzeugkarosserien eingesetzt. Durch das flexible Walzen wird in vorteilhafter Weise erreicht, dass das flexibel gewalzte Stahlflachprodukt Dickenverläufe aufweist, die an das später hieraus umzuformende Bauteil belastungsangepasst sind, wodurch entsprechend Material und Gewicht eingespart wird und mehre Bauteile ohne weitere Fügeverfahren ineinander integriert werden können, was zu geringeren Fertigungskosten führt. Insbesondere kommen Bauteile in Frage, die über ihre Länge eine unterschiedliche Beanspruchung erfahren.

Wie aus der Tabelle 1 ersichtlich wird, weist sowohl das nicht kaltumgeformte als auch das kaltumgeformte Band nach einer identischen Wärmebehandlung ein ähnliches Niveau an Zugfestigkeit und Bruchdehnung auf. Dies spricht dafür, dass die Eigenschaften unabhängig vom Kaltumformgrad einstellbar sind und somit eine ideale Eignung für flexibel gewalzte Stahlflachprodukte gegeben ist.

Die Tabelle 2 zeigt die chemische Zusammensetzung in Gew.-% der erfindungsgemäßen Legierung WB3/KB3 sowie der beiden Legierungen WB1/KB1 und WB2/KB2 mit nicht erfindungsgemäßem Cr-Gehalt, die untersucht wurden.

Ein nach dem erfindungsgemäßen Verfahren hergestelltes und flexibel gewalztes Stahlflachprodukt weist eine Zugfestigkeit Rm von mindestens 700 MPa, vorzugsweise von Rm > 800 bis 1600 MPa, und eine Bruchdehnung A50 von 6 % bis 45 % auf.

Vorzugsweise wird das flexibel gewalzte Stahlflachprodukt schmelztauch- oder elektrolytisch verzinkt oder metallisch, anorganisch oder organisch überzogen.

**Tabelle 1 - Laborergebnisse Warm- und Kaltband unter gleichen Glühbedingungen WB: Warmband, ca. 2mm**

| | Glühtemperatur | Haltedauer | Rp0,2 | Rm | Ag | A50 |
|---|---|---|---|---|---|---|
| WB1 | 638 °C | 24 h | 415 | 787 | 16,0 | 18,5 |
| KB1 | 638 °C | 24 h | 359 | 812 | 13,1 | 15,1 |
| WB2 | 638 °C | 24 h | 367 | 800 | 13,3 | 16,7 |
| KB2 | 638 °C | 24 h | 419 | 751 | 14,3 | 16,2 |
| WB3 | 680 °C | 5 h | 710 | 940 | 27,5 | 31,4 |
| KB3 | 680 °C | 5 h | 740 | 980 | 25,6 | 31,2 |

| | | | | | | |
|---|---|---|---|---|---|---|
| KB: Kaltband, ca. 1mm (ca. 50% Kaltumformung) Rp0,2: 0,2% Dehngrenze Rm: Zugfestigkeit Ag: Gleichmaßdehnung A50: Bruchdehnung | | | | | | |

**Tabelle 2 - untersuchte erfindungsgemäße Legierungen**

| | C | Mn | Al | Si | P | S | N | Cr | B |
|---|---|---|---|---|---|---|---|---|---|
| WB1 / KB1 | 0,2 | 5 | 0,025 | 0,008 | 0,001 | 0,0012 | 0,001 | 0,001 | 0 |
| WB2 / KB2 | 0,2 | 5 | 0,025 | 0,008 | 0,001 | 0,0012 | 0,001 | 0,001 | 0 |
| WB3 / KB4 | 0,2 | 7 | 1,9 | 0,5 | 0,001 | 0,0014 | 0,001 | 0,974 | 0,0002 |

## Patentansprüche

1. Verfahren zur Herstellung eines flexibel gewalzten Stahlflachprodukts umfassend die Schritte:
- Erschmelzen einer Stahlschmelze bestehend aus (in Gew.-%):
C: 0,005 bis 0,6
Mn: 4 bis 10
AI: 0,005 bis 4
Si: 0,005 bis 2
P: 0,001 bis 0,2
S: bis 0,05
N: 0,001 bis 0,3
Rest Eisen einschließlich unvermeidbarer stahlbegleitender Elemente, mit optionaler Zulegierung von einem oder mehreren der folgenden Elemente (in Gew.-%):
Sn: 0 bis 0,5
Ni: 0 bis 2
Cu: 0,05 bis 3
Cr: 0,1 bis 4
V: 0,005 bis 0,9
Nb: 0,005 bis 0,9
Ti: 0,005 bis 0,9
Mo: 0,01 bis 3
W: 0,1 bis 3
Co: 0,1 bis 3
B: 0,0001 bis 0,05
Zr: 0,005 bis 0,5
Ca: 0,0002 bis 0,1
- Vergießen der Stahlschmelze zu einem Vorband mittels eines endabmessungsnahen horizontalen oder vertikalen Bandgießverfahrens oder Vergießen der Stahlschmelze zu einer Bramme oder Dünnbramme mittels eines horizontalen oder vertikalen Brammen- oder Dünnbrammengießverfahrens,
- Flexibles Warmwalzen des Vorbandes, insbesondere mit einer Dicke von größer 3 mm, oder der Bramme oder der Dünnbramme zu einem flexibel gewalzten Stahlflachprodukt oder Warmwalzen des Vorbandes, insbesondere mit einer Dicke von größer 3 mm, oder der Bramme oder der Dünnbramme zu einem Warmband mit einer einheitlichen Dicke,
- Optionales Glühen des Warmbandes,
- Flexibles Kaltwalzen des auf eine einheitliche Dicke gewalzten Warmbandes oder des endabmessungsnah gegossenen Vorbandes mit einer Dicke von kleiner gleich 3 mm unter Ausnutzung des TRIP und/oder TWIP-Effekts zu einem flexibel gewalzten Stahlflachprodukt oder Kaltwalzen des auf eine einheitliche Dicke gewalzten Warmbandes oder des endabmessungsnah gegossenen Vorbandes mit einer Dicke von kleiner gleich 3 mm zu einem Kaltband mit einer einheitlichen Dicke, optionales Glühen des Kaltbandes und anschließendes flexibles Kaltwalzen des auf eine einheitliche Dicke gewalzten Kaltbandes unter Ausnutzung des TRIP und/oder TWIP-Effekts zu einem flexibel gewalzten Stahlflachprodukt,
- Glühen des flexibel gewalzten Stahlflachprodukts mit folgenden Parametern:
Glühtemperatur: 600 bis 750 °C, Glühdauer: 1 Minute bis 48 Stunden.

2. Verfahren nach Anspruch 1, **dadurch gekennzeichnet, dass** der Stahl (in Gew.-%) enthält:
AI: > 0,1 bis 4.

3. Verfahren nach Anspruch 1 oder 2, **dadurch gekennzeichnet, dass** der Stahl (in Gew.-%) enthält:
Si: > 0,5 bis 2.

4. Verfahren nach einem der Ansprüche 1 bis 3, **dadurch gekennzeichnet, dass** die Summe der Gehalte (in Gew.-%) von Al und Si > 0,8 ist.

5. Verfahren nach mindestens einem der Ansprüche 1 bis 4, **dadurch gekennzeichnet, dass** der Stahl (in Gew.-%) enthält:
AI: > 0,5 bis 4, wobei der Gehalt an gelöstem Stickstoff in der Legierung auf < 300 ppm begrenzt ist.

6. Verfahren nach einem der Ansprüche 1 bis 5, **dadurch gekennzeichnet, dass** der Stahl (in Gew.-%) enthält:
Sn: 0,005 bis 0,5.

7. Verfahren nach einem der Ansprüche 1 bis 6, **dadurch gekennzeichnet, dass** der Stahl (in Gew.-%) enthält:
Ni: 0,1 bis 2.

8. Verfahren nach einem der Ansprüche 1 bis 7, **dadurch gekennzeichnet, dass** der Stahl (in Gew.-%) enthält:
Cu: 0,1 bis 3.

9. Verfahren nach einem der Ansprüche 1 bis 8, **dadurch gekennzeichnet, dass** der Stahl (in Gew.-%) enthält:
B: 0,0005 bis 0,05.

10. Verfahren nach einem der Ansprüche 1 bis 9, **dadurch gekennzeichnet, dass** der Stahl (in Gew.-%) enthält:
Zr: 0,01 bis 0,5.

11. Verfahren nach einem der Ansprüche 1 bis 10, **dadurch gekennzeichnet, dass** der Stahl eine Zugfestigkeit Rm von mindestens 700 MPa, vorzugsweise von > 800 bis 1600 MPa, und eine Bruchdehnung A50 von 6 % bis 45 % aufweist.

12. Verfahren nach einem der Ansprüche 1 bis 11, **dadurch gekennzeichnet, dass** die Zugfestigkeit Rm des Stahlflachprodukts mindestens 700 MPa, vorzugsweise > 800 bis 1600 MPa und die Bruchdehnung A50 6 % bis 45 % beträgt.

13. Verfahren nach einem der Ansprüche 1 bis 12, **dadurch gekennzeichnet, dass** das Stahlflachprodukt schmelztauch- oder elektrolytisch verzinkt wird oder metallisch, anorganisch oder organisch überzogen wird.

14. Verwendung eines flexibel gewalzten Stahlflachprodukts hergestellt nach einem Verfahren der Ansprüche 1 bis 13 in der Automobilindustrie, Agrartechnik, im Schienenfahrzeugbau, in der Verkehrstechnik oder Hausgerätetechnik.

## Claims

1. Method for producing a flexibly rolled flat steel product, comprising the steps of:
- smelting a steel melt consisting of (in wt.%):
C: 0.005 to 0.6
Mn: 4 to 10
Al: 0.005 to 4
Si: 0.005 to 2
P: 0.001 to 0.2
S: up to 0.05
N: 0.001 to 0.3
the remainder being iron including unavoidable steel-accompanying elements, with the optional alloying of one or more of the following elements (in wt.%):
Sn: 0 to 0.5
Ni: 0 to 2
Cu: 0.05 to 3
Cr: 0.1 to 4
V: 0.005 to 0.9
Nb: 0.005 to 0.9
Ti: 0.005 to 0.9
Mo: 0.01 to 3
W: 0.1 to 3
Co: 0.1 to 3
B: 0.0001 to 0.05
Zr: 0.005 to 0.5
Ca: 0.0002 to 0.1
- casting the steel melt to form a near-net strip by means of a near-net-shape horizontal or vertical strip casting process or casting the steel melt to form a slab or thin slab by means of a horizontal or vertical slab or thin slab casting process,
- flexibly hot rolling the near-net strip, in particular having a thickness greater than 3 mm, or the slab or thin slab to form a flexibly rolled flat steel product, or hot rolling the near-net strip, in particular having a thickness greater than 3 mm, or the slab or thin slab to form a hot strip having a uniform thickness,
- optionally annealing the hot strip,
- flexibly cold rolling the hot strip rolled to a uniform thickness or the near-net-shape cast near-net strip having a thickness of less than or equal to 3 mm using the TRIP and/or TWIP effect to form a flexibly rolled flat steel product, or cold rolling the hot strip rolled to a uniform thickness or the near-net-shape cast near-net strip having a thickness of less than or equal to 3 mm to form a cold strip having a uniform thickness, optionally annealing the cold strip and subsequently flexibly cold rolling the cold strip rolled to a uniform thickness using the TRIP and/or TWIP effect to form a flexibly rolled flat steel product,
- annealing the flexibly rolled flat steel product using the following parameters:
annealing temperature: 600 to 750°C, annealing time: 1 minute to 48 hours.

2. Method according to claim 1, **characterised in that** the steel (in wt.%) contains:
Al: > 0.1 to 4.

3. Method according to either claim 1 or claim 2, **characterised in that** the steel (in wt.%) contains:
Si: > 0.5 to 2.

4. Method according to any of claims 1 to 3, **characterised in that** the sum of the contents (in wt.%) of Al and Si is > 0.8.

5. Method according to at least one of claims 1 to 4, **characterised in that** the steel (in wt.%) contains:
Al: > 0.5 to 4, the content of dissolved nitrogen in the alloy being limited to < 300 ppm.

6. Method according to any of claims 1 to 5, **characterised in that** the steel (in wt.%) contains:
Sn: 0.005 to 0.5.

7. Method according to any of claims 1 to 6, **characterised in that** the steel (in wt.%) contains:
Ni: 0.1 to 2.

8. Method according to any of claims 1 to 7, **characterised in that** the steel (in wt.%) contains:
Cu: 0.1 to 3.

9. Method according to any of claims 1 to 8, **characterised in that** the steel (in wt.%) contains:
B: 0.0005 to 0.05.

10. Method according to any of claims 1 to 9, **characterised in that** the steel (in wt.%) contains:
Zr: 0.01 to 0.5.

11. Method according to any of claims 1 to 10, **characterised in that** the steel has a tensile strength Rm of at least 700 MPa, preferably > 800 to 1600 MPa, and an elongation at break A50 of 6% to 45%.

12. Method according to any of claims 1 to 11, **characterised in that** the tensile strength Rm of the flat steel product is at least 700 MPa, preferably > 800 to 1600 MPa and the elongation at break A50 is 6% to 45%.

13. Method according to any of claims 1 to 12, **characterised in that** the flat steel product is hot-dip galvanised or electrolytically galvanised or coated with a metal, inorganic or organic coating.

14. Use of a flexibly rolled flat steel product produced according to a method according to claims 1 to 13 in the automotive industry, agricultural engineering, in rail vehicle construction, in traffic engineering or household appliance engineering.

## Revendications

1. Procédé de production d'un produit plat en acier laminé souple, ledit procédé comprenant les étapes suivantes :
- obtenir un acier en fusion comprenant (en % en poids) :
C: 0,005 à 0,6
Mn: 4 à 10
Al: 0,005 à 4
Si: 0,005 à 2
P: 0,001 à 0,2
S: jusqu'à 0,05
N: 0,001 à 0,3
le reste étant du Fer incluant des éléments inévitables liés à l'acier, avec ajout facultatif d'un ou plusieurs des éléments suivants (en % en poids):
Sn: 0 à 0,5
Ni: 0 à 2
Cu: 0,05 à 3
Cr: 0,1 à 4
V: 0,005 à 0,9
Nb: 0,005 à 0,9
Ti: 0,005 à 0,9
Mo: 0,01 à 3
W: 0,1 à 3
Co: 0,1 à 3
B: 0,0001 à 0,05
Zr: 0,005 à 0,5
Ca: 0,0002 à 0,1
- couler l'acier en fusion pour obtenir une pré-bande au moyen d'un procédé de coulée de bande horizontal ou vertical à peu près aux dimensions finales ou couler l'acier en fusion pour obtenir une brame ou une brame mince au moyen d'un procédé de coulée de brame ou de brame mince horizontal ou vertical,
- effectuer un laminage à chaud souple de la pré-bande, notamment avec une épaisseur supérieure à 3 mm, ou de la brame ou brame mince pour obtenir un produit plat en acier laminé souple ou effectuer un laminage à chaud de la pré-bande, notamment avec une épaisseur supérieure à 3 mm, ou de la brame ou brame mince pour obtenir une bande à chaud ayant une épaisseur uniforme,
- effectuer en option un recuit à chaud,
- effectuer un laminage à froid souple de la bande laminée à chaud à une épaisseur uniforme ou de la pré-bande coulée à peu près aux dimensions finale avec une épaisseur inférieure ou égale à 3 mm par effet TRIP et/ou TWIP pour obtenir un produit plat en acier laminé souple ou effectuer un laminage à froid de la bande à chaud laminée à une épaisseur uniforme ou de la pré-bande coulée à peu près aux dimensions finales et ayant une épaisseur inférieure ou égale à 3 mm pour obtenir une bande à froid, recuire en option la bande à froid puis effectuer un laminage à froid souple de la bande laminée à froid à une épaisseur uniforme à l'aide de l'effet TRIP et/ou TWIP pour obtenir un produit plat en acier laminé souple,
- recuire le produit plat en acier laminé souple avec les paramètres suivants :
température de recuit : 600 à 750 °C, temps de recuit : 1 minute à 48 heures.

2. Procédé selon la revendication 1, **caractérisé en ce que** l'acier contient (en % en poids) :
Al: > 0,1 à 4.

3. Procédé selon la revendication 1 ou 2, **caractérisé en ce que** l'acier contient (en % en poids) :
Si: > 0,5 à 2.

4. Procédé selon l'une des revendications 1 à 3, **caractérisé en ce que** la somme des teneurs (en % en poids) en Al et Si est > 0,8.

5. Procédé selon l'une au moins des revendications 1 à 4, **caractérisé en ce que** l'acier contient (en % en poids):
Al: > 0,5 à 4, la teneur en azote dissous dans l'alliage étant limitée à < 300 ppm.

6. Procédé selon l'une des revendications 1 à 5, **caractérisé en ce que** l'acier contient (en % en poids):
Sn: 0,005 à 0,5.

7. Procédé selon l'une des revendications 1 à 6, **caractérisé en ce que** l'acier contient (en % en poids):
Ni: 0,1 à 2.

8. Procédé selon l'une des revendications 1 à 7, **caractérisé en ce que** l'acier contient (en % en poids):
Cu: 0,1 à 3.

9. Procédé selon l'une des revendications 1 à 8, **caractérisé en ce que** l'acier contient (en % en poids):
B: 0,0005 à 0,05.

10. Procédé selon l'une des revendications 1 à 9, **caractérisé en ce que** l'acier contient (en % en poids):
Zr: 0,01 à 0,5.

11. Procédé selon l'une des revendications 1 à 10, **caractérisé en ce que** l'acier présente une résistance à la traction Rm d'au moins 700 MPa, de préférence > 800 à 1600 MPa, et un allongement à la rupture A50 de 6 % à 45 %.

12. Procédé selon l'une des revendications 1 à 11, **caractérisé en ce que** la résistance à la traction Rm du produit plat en acier est d'au moins 700 MPa, de préférence > 800 à 1600 MPa et l'allongement à la rupture A50 est de 6 % à 45 %.

13. Procédé selon l'une des revendications 1 à 12, **caractérisé en ce que** le produit plat en acier est galvanisé par immersion à chaud ou par électrolyse ou est revêtu d'une matière métallique, minérale ou organique.

14. Utilisation d'un produit plat en acier laminé souple fabriqué selon un procédé des revendications 1 à 13 dans l'industrie automobile, l'ingénierie agricole, la construction de véhicules ferroviaires, l'ingénierie de la circulation ou l'ingénierie des appareils domestique.
